# EUROPEAN PATENT APPLICATION

(11) **EP 4 614 463 A1**
(43) Date of publication of application: **10.09.2025**
(21) Application number: 23890245.6
(22) Date of filing: 05.07.2023
(51) Int. Cl.: G06V 20/58

(54) **TARGET DETECTION METHOD AND APPARATUS, AND STORAGE MEDIUM**

(30) Priority: 16.11.2022 CN 202211435616
(71) Applicant: Huawei Technologies Co., Ltd., Shenzhen, Guangdong 518129 (CN)
(72) Inventor: ZHOU, Kaiqiang, Shenzhen, Guangdong 518129 (CN); GAO, Bin, Shenzhen, Guangdong 518129 (CN); ZHAO, Yue, Shenzhen, Guangdong 518129 (CN); JIANG, Lihui, Shenzhen, Guangdong 518129 (CN); ZHANG, Hongbo, Shenzhen, Guangdong 518129 (CN); WU, Tao, Shenzhen, Guangdong 518129 (CN)
(74) Representative: Goddar, Heinz J.
(86) International application number: PCT/CN2023/105910
(87) International publication number: WO 2024/103803

(57) **Abstract**

Embodiments of this application provide a target detection method and apparatus, and a storage medium. The method includes: performing feature extraction on an input image, to obtain a plurality of layers of feature maps, where the feature map includes road surface feature information, and downsampling rates of the plurality of layers of feature maps are different; performing merging on the plurality of layers of feature maps, to obtain a plurality of two-dimensional instance features respectively corresponding to the plurality of layers of feature maps; and performing prediction based on the plurality of two-dimensional instance features, to obtain a road surface obstacle target in the input image. Target prediction is performed based on the feature map including the road surface feature information. Road surface context information is considered, so that accuracy of target detection can be improved.

## Description

This application claims priority to Chinese Patent Application No. 202211435616.2, filed with the China National Intellectual Property Administration on November 16, 2022 and entitled "TARGET DETECTION METHOD AND APPARATUS, AND STORAGE MEDIUM", which is incorporated herein by reference in its entirety.

### TECHNICAL FIELD

This application relates to the field of detection technologies, and in particular, to a target detection method and apparatus, and a storage medium.

### BACKGROUND

As autonomous driving technologies continuously develop, application scenarios of autonomous driving also change from simple specific scenarios such as airports and ports to the open world such as urban roads and highways. This brings greater challenges to driving safety.

Among unsafe factors in the open world, a non-whitelist obstacle on a road is one of the most serious threats to driving safety. If the non-whitelist obstacle on the road can be detected in advance, a warning can be given in advance, and a lane change or braking action can be performed. This can greatly improve driving safety.

However, non-whitelist obstacle detection has high requirements on preparation. If a false positive causes a sudden brake, accidents such as a rear-end collision are likely to occur. In actual deployment, it is usually required that a quantity of times of false detection per 100 km be less than one.

Currently, a common two-stage detector Faster R-CNN, a one-stage detector Yolo V3, or the like is usually used in two-dimensional (Two-Dimensional, 2D) target detection. A network structure of the detector is simple, and detection on a whitelist obstacle is user-friendly.

However, in this detection manner, it is difficult to detect a non-whitelist obstacle, false detection usually occurs, and it is difficult to ensure accuracy.

### SUMMARY

This application discloses a target detection method and apparatus, and a storage medium, to detect a non-whitelist obstacle, and improve target detection accuracy.

According to a first aspect, an embodiment of this application provides a target detection method. The method may include: performing feature extraction on an input image, to obtain a plurality of layers of feature maps, where the feature map includes road surface feature information, the feature map also includes obstacle information, and downsampling rates of the plurality of layers of feature maps are different; then, performing merging on each layer of feature map and an upper layer of feature map in the plurality of layers of feature maps, to obtain a plurality of two-dimensional instance features respectively corresponding to the plurality of layers of feature maps, where for a first layer of feature map, if an upper layer of feature map does not exist, merging is not performed; and finally, performing prediction based on the plurality of two-dimensional instance features, to obtain a road surface obstacle target in the input image.

That the sampling rates are different may be that scales of the feature maps are different. A larger downsampling rate indicates a smaller size of a feature map of a layer. For example, the down sampling rates are respectively 8x, 16x, 32x, and 64x. A size of a feature map that is downsampled at 8x is 1/8 of the input image.

In this embodiment of this application, feature extraction is performed on the input image, to obtain the plurality of layers of feature maps including the road surface feature information. Then, merging is performed on the plurality of layers of feature maps, to obtain the plurality of two-dimensional instance features. The road surface obstacle target is obtained based on the plurality of two-dimensional instance features. In this means, target prediction is performed based on the feature map including the road surface feature information. Road surface context information is considered, so that accuracy of target detection can be improved.

In a possible implementation, the method further includes: performing processing based on the plurality of layers of feature maps and the plurality of two-dimensional instance features, to obtain a road surface segmentation mask mask; and then, performing prediction based on the plurality of two-dimensional instance features and the road surface segmentation mask, to obtain the road surface obstacle target in the input image.

In this example, prediction is performed based on the plurality of two-dimensional instance features and the road surface segmentation mask, so that a false detection rate can be further reduced.

In a possible implementation, the plurality of road surface features respectively corresponding to the plurality of layers of feature maps are obtained based on the plurality of layers of feature maps and the plurality of two-dimensional instance features. For an i^{th} layer of feature map, merging is performed based on the i^{th} layer of feature map and a road surface feature corresponding to an (i-1)^{th} layer of feature map, to obtain a merged feature. Then, merging is performed on the merged feature and a two-dimensional instance feature corresponding to the i^{th} layer of feature map, to obtain a road surface feature corresponding to the i^{th} layer of feature map. The plurality of road surface features respectively corresponding to the plurality of layers of feature maps include the road surface feature corresponding to the i^{th} layer of feature map, and i is an integer not less than 1. When i is 1, a road surface feature corresponding to a 0^{th} layer of feature map does not exist. Then, the road surface segmentation mask is obtained based on the plurality of road surface features respectively corresponding to the plurality of layers of feature maps.

The road surface segmentation mask is a binary map of road surface prediction. Based on the foregoing merging, the plurality of road surface features may be obtained, and then the road surface segmentation mask is obtained.

In a possible implementation, prediction is performed based on the plurality of two-dimensional instance features, to obtain an initial prediction box. Whether a central point of the initial prediction box is on a road surface is determined based on the road surface segmentation mask. If the central point of the initial prediction box is on the road surface, the initial prediction box is used as the road surface obstacle target in the input image.

In this example, an obstacle that is not on the road surface is filtered based on the road surface segmentation mask. This can further reduce a false detection rate.

In a possible implementation, the method further includes: performing segmentation mask prediction on the plurality of layers of feature maps, to obtain a plurality of obstacle features respectively corresponding to the plurality of layers of feature maps; and then, performing prediction on the input image based on the plurality of two-dimensional instance features and the plurality of obstacle features, to obtain the road surface obstacle target in the input image.

In this solution, processing is performed based on the feature map including the road surface feature information, and the obtained obstacle feature is combined, so that the category-independent feature of the target area can be enhanced, obstacle universality can be enhanced, and target detection accuracy can be further improved.

In a possible implementation, prediction is performed based on the plurality of two-dimensional instance features, to obtain the initial prediction box and a first confidence level. Whether the central point of the initial prediction box falls within an obstacle is determined based on the plurality of obstacle features. If the central point of the initial prediction box falls within the obstacle, the first confidence level is updated to a second confidence level, where the second confidence level is greater than the first confidence level. If the second confidence level is greater than the preset value, the road surface obstacle target in the input image is determined based on the initial prediction box.

In this example, matching is performed based on a preset confidence level value preset based on the obstacle feature and a confidence level obtained based on the two-dimensional instance feature. This can further reduce the false detection rate.

In a possible implementation, the initial prediction box is used as the road surface obstacle target in the input image, or whether the central point of the initial prediction box is on the road surface is determined based on the road surface segmentation mask, and the road surface segmentation mask is obtained through processing based on the plurality of layers of feature maps and the plurality of two-dimensional instance features. If the central point of the initial prediction box is on the road surface, the initial prediction box is used as the road surface obstacle target in the input image.

The obstacle that is not on the road surface is filtered out through double confirmation of the road surface segmentation mask and the obstacle feature, and matching is performed based on the preset confidence level value preset based on the obstacle feature and the confidence level obtained based on the two-dimensional instance feature. In this way, the false detection rate can be further reduced.

In a possible implementation, a prediction model includes a backbone network and a main detection branch network, and the main detection branch network includes a neck network and a head network. The performing feature extraction on an input image, to obtain a plurality of layers of feature maps is implemented through the backbone network. The performing merging on each layer of feature map and an upper layer of feature map in the plurality of layers of feature maps, to obtain a plurality of two-dimensional instance features respectively corresponding to the plurality of layers of feature maps is implemented through the neck network. The performing prediction based on the plurality of two-dimensional instance features, to obtain a road surface obstacle target in the input image is implemented through the head network.

In this example, the foregoing target detection is implemented in the prediction model.

In a possible implementation, the backbone network and the neck network are obtained through training in the following manner: for a k^{th} time of training, inputting a sample image to a backbone network Zₖ for feature extraction, to obtain a plurality of layers of sample feature maps of the sample image, where k is an integer not less than 1; inputting the plurality of layers of sample feature maps to a neck network Nₖ for merging, to obtain a plurality of two-dimensional instance features respectively corresponding to the plurality of layers of sample feature maps; obtaining a predicted value of the road surface segmentation mask based on the plurality of two-dimensional instance features and the plurality of layers of sample feature maps; calculating a loss value based on a labeling value and the predicted value, and calculating a gradient based on the loss value; and adjusting parameters of the backbone network Zₖ and the neck network Nₖ based on the gradient, setting k=k+1, repeating the foregoing steps until k reaches a preset quantity of times, using the backbone network Zₖ as the backbone network, and using the neck network Nₖ as the neck network.

Based on this training, the backbone network and the neck network that can extract the road surface feature information may be obtained.

According to a second aspect, this application provides a target detection apparatus. The apparatus includes: a processing module, configured to perform feature extraction on an input image, to obtain a plurality of layers of feature maps, where the feature map includes road surface feature information, and downsampling rates of the plurality of layers of feature maps are different, where the processing module is further configured to perform merging on each layer of feature map and an upper layer of feature map in the plurality of layers of feature maps, to obtain a plurality of two-dimensional instance features respectively corresponding to the plurality of layers of feature maps; and a prediction module, configured to perform prediction based on the plurality of two-dimensional instance features, to obtain a road surface obstacle target in the input image.

In a possible implementation, the processing module is further configured to perform processing based on the plurality of layers of feature maps and the plurality of two-dimensional instance features, to obtain a road surface segmentation mask mask. The prediction module is further configured to perform prediction based on the plurality of two-dimensional instance features and the road surface segmentation mask, to obtain the road surface obstacle target in the input image.

In a possible implementation, the processing module is further configured to: perform processing based on the plurality of layers of feature maps and the plurality of two-dimensional instance features, to obtain a plurality of road surface features respectively corresponding to the plurality of layers of feature maps; for an i^{th} layer of feature map, perform merging based on the i^{th} layer of feature map and a road surface feature corresponding to an (i-1)^{th} layer of feature map, to obtain a merged feature; perform merging on the merged feature and a two-dimensional instance feature corresponding to the i^{th} layer of feature map, to obtain a road surface feature corresponding to the i^{th} layer of feature map, where the plurality of road surface features respectively corresponding to the plurality of layers of feature maps include the road surface feature corresponding to the i^{th} layer of feature map, i is an integer not less than 1, and when i is 1, a road surface feature corresponding to a 0^{th} layer of feature map does not exist; and obtain the road surface segmentation mask based on the plurality of road surface features respectively corresponding to the plurality of layers of feature maps.

In a possible implementation, the prediction module is further configured to: perform prediction based on the plurality of two-dimensional instance features, to obtain an initial prediction box; determine, based on the road surface segmentation mask, whether a central point of the initial prediction box is on a road surface; and if the central point of the initial prediction box is on the road surface, use the initial prediction box as the road surface obstacle target in the input image.

In a possible implementation, the processing module is further configured to perform segmentation mask prediction on the plurality of layers of feature maps, to obtain a plurality of obstacle features respectively corresponding to the plurality of layers of feature maps. The prediction module is further configured to perform prediction based on the plurality of two-dimensional instance features and the plurality of obstacle features, to obtain the road surface obstacle target in the input image.

In a possible implementation, the prediction module is further configured to: perform prediction based on the plurality of two-dimensional instance features, to obtain the initial prediction box and a first confidence level; determine, based on the obstacle features, whether the central point of the initial prediction box falls within an obstacle; if the central point of the initial prediction box falls within the obstacle, update the first confidence level to a second confidence level, where the second confidence level is greater than the first confidence level; and if the second confidence level is greater than a preset value, determine the road surface obstacle target in the input image based on the initial prediction box.

In a possible implementation, the prediction module is further configured to: use the initial prediction box as the road surface obstacle target in the input image; or determine, based on the road surface segmentation mask, whether the central point of the initial prediction box is on the road surface, where the road surface segmentation mask is obtained by performing processing based on the plurality of layers of feature maps and the plurality of two-dimensional instance features; and if the central point of the initial prediction box is on the road surface, use the initial prediction box as the road surface obstacle target in the input image.

In a possible implementation, the processing module includes a backbone network and a main detection branch network, and the main detection branch network includes a neck network and a head network. The performing feature extraction on an input image, to obtain a plurality of layers of feature maps is implemented through the backbone network. The performing merging on each layer of feature map and an upper layer of feature map in the plurality of layers of feature maps, to obtain a plurality of two-dimensional instance features respectively corresponding to the plurality of layers of feature maps is implemented through the neck network. The performing prediction based on the plurality of two-dimensional instance features, to obtain a road surface obstacle target in the input image is implemented through the head network.

In a possible implementation, the backbone network and the neck network are obtained through training in the following manner: for a k^{th} time of training, inputting a sample image to a backbone network Zₖ for feature extraction, to obtain a plurality of layers of sample feature maps of the sample image, where k is an integer not less than 1; inputting the plurality of layers of sample feature maps to a neck network Nₖ for merging, to obtain a plurality of two-dimensional instance features respectively corresponding to the plurality of layers of sample feature maps; obtaining a predicted value of the road surface segmentation mask based on the plurality of two-dimensional instance features and the plurality of layers of sample feature maps; calculating a loss value based on a labeling value and the predicted value, and calculating a gradient based on the loss value; and adjusting parameters of the backbone network Zₖ and the neck network Nₖ based on the gradient, setting k=k+1, repeating the foregoing steps until k reaches a preset quantity of times, using the backbone network Zₖ as the backbone network, and using the neck network Nₖ as the neck network.

According to a third aspect, this application provides a target detection apparatus. The target detection apparatus includes a processor and a communication interface. The communication interface is configured to receive and/or send data, and/or the communication interface is configured to provide an output and/or output for the processor. The processor is configured to invoke computer instructions to implement the method according to any one of the possible implementations of the first aspect.

In a possible implementation, the target detection apparatus further includes one or more memories.

In a possible implementation, the target detection apparatus is a chip or a chip system.

According to a fourth aspect, this application provides a computer storage medium, including computer instructions. When the computer instructions are run on an electronic device, the electronic device is enabled to perform the method according to any one of the possible implementations of the first aspect.

According to a fifth aspect, an embodiment of this application provides a computer program product. When the computer program product is run on a computer, the computer is enabled to perform the method according to any one of the possible implementations of the first aspect.

It may be understood that the apparatus according to the second aspect, the apparatus according to the third aspect, the computer storage medium according to the fourth aspect, or the computer program product according to the fifth aspect is all configured to perform the method according to any one of the possible implementations of the first aspect. Therefore, for beneficial effect that can be achieved by the electronic device, the computer storage medium, the chip, and the computer program product, refer to the beneficial effect in the corresponding method. Details are not described herein again.

### BRIEF DESCRIPTION OF DRAWINGS

The following describes the accompanying drawings used in embodiments of this application.
FIG. 1 is a diagram of a target detection system to which an embodiment of this application is applicable;
FIG. 2 is a schematic flowchart of a target detection method according to an embodiment of this application;
FIG. 3 is a diagram of a feature extraction network according to an embodiment of this application;
FIG. 4 is a schematic flowchart of another target detection method according to an embodiment of this application;
FIG. 5a is a diagram of a type of model processing according to an embodiment of this application;
FIG. 5b is a diagram of a model according to an embodiment of this application;
FIG. 6 is a schematic flowchart of still another target detection method according to an embodiment of this application;
FIG. 7 is a diagram of another type of model processing according to an embodiment of this application;
FIG. 8 is a diagram of still another type of model processing according to an embodiment of this application;
FIG. 9 is a diagram of another model according to an embodiment of this application;
FIG. 10 is a diagram of a structure of a target detection apparatus according to an embodiment of this application; and
FIG. 11 is a diagram of a structure of another target detection apparatus according to an embodiment of this application.

### DESCRIPTION OF EMBODIMENTS

The following describes embodiments of this application with reference to the accompanying drawings in embodiments of this application. Terms used in implementations of embodiments of this application are merely used to explain specific embodiments of this application, and are not intended to limit this application.

For ease of understanding, the following provides, for reference, example descriptions of some concepts related to embodiments of this application. Details are as follows.
1. Whitelist obstacle: an obstacle defined in a whitelist in advance, for example, a person, a motor vehicle, a non-motor vehicle, a traffic cone, a traffic pole, or a water-filled barrier on a road.
2. Non-whitelist obstacle: all obstacles that may appear on the road and that are not in the whitelist, such as a damaged tire, a stone, a carton, and a garbage bag.

The foregoing example descriptions of the concepts may be applied in the following embodiments.

Currently, a common two-stage detector Faster R-CNN or one-stage detector Yolo V3 is used to detect a whitelist obstacle. However, it is difficult to detect a non-whitelist obstacle, false detection usually occurs, and it is difficult to ensure accuracy. In view of this, this application provides a target detection method and apparatus, and a storage medium, to detect a non-whitelist obstacle, and improve target detection accuracy.

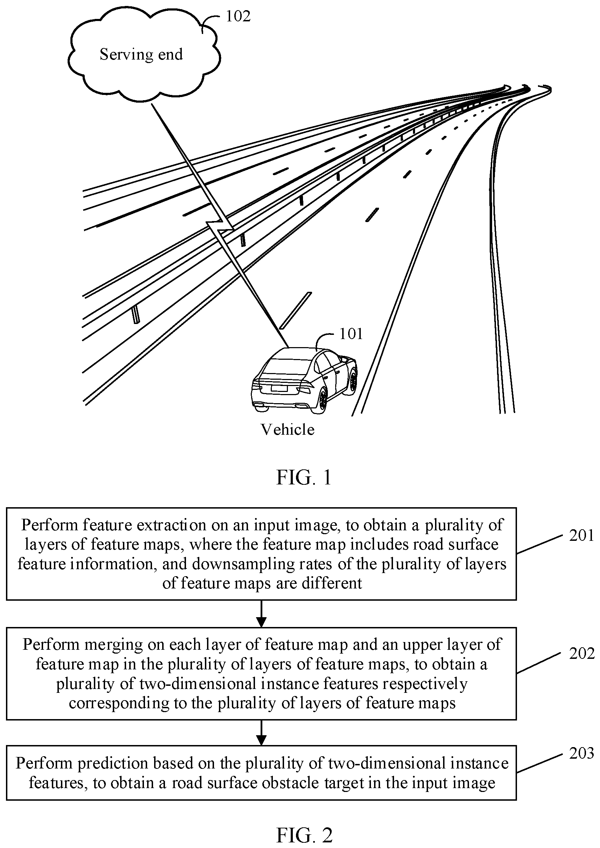

The following describes in detail a system architecture in embodiments of this application with reference to the accompanying drawings. FIG. 1 is a diagram of a target detection system to which an embodiment of this application is applicable. The system includes a vehicle 101 and a serving end 102.

The vehicle 101 is an apparatus that has a communication capability and a computing capability, and can provide a mobile travel service for a user. The vehicle 101 can provide an environment in which software, hardware, or a module combining software and hardware is deployed. For example, software can be installed on the vehicle 101. For another example, the vehicle 101 has an interface for connecting to hardware, and the hardware may be connected to the vehicle 101 through the interface. For another example, the vehicle 101 has an environment in which a hardware driver is installed.

The serving end 102 is an apparatus having a centralized computing capability. For example, the serving end 102 may be implemented by using an apparatus like a server, a virtual machine, a cloud, a roadside apparatus, or a robot.

When the serving end 102 includes a server, a type of the server includes but is not limited to a general-purpose computer, a dedicated server computer, a blade server, and the like. A quantity of servers included in the serving end 102 is not strictly limited in this application, and there may be one or more servers (for example, a server cluster).

The virtual machine is a software-simulated computing module that has complete hardware system functions and that runs in an entirely isolated environment. Certainly, in addition to the virtual machine, the serving end 102 may be alternatively implemented by using another computing instance, for example, a container.

The cloud is a software platform that uses an application virtualization technology, and can enable one or more pieces of software and applications to be developed and run in an independent virtualized environment. Optionally, when the serving end 102 is implemented by using the cloud, the cloud may be deployed on a public cloud, a private cloud, a hybrid cloud, or the like.

The roadside apparatus is an apparatus disposed on a road side (or an intersection, a roadside, or the like). A road may be an outdoor road (for example, a main road, an auxiliary road, an elevated road, or a temporary road), or may be an indoor road (for example, a road in an indoor parking lot). The roadside apparatus can provide a service for the vehicle. It should be noted that the roadside apparatus may be an independent device, or may be integrated into another device. For example, the roadside apparatus may be integrated into a device like a smart gas station, a charging pile, a smart signal light, a street lamp, a telegraph pole, or a traffic sign.

Because some obstacles may exist on a road on which the vehicle 101 travels, for example, a person, a motor vehicle, a non-motor vehicle, a traffic cone, a traffic pole, a water-filled barrier, a damaged tire, a stone, a carton, or a garbage bag on the road, when the vehicle 101 is traveling, some security risks exist. For example, in scenarios such as autonomous driving and assisted driving, these obstacles need to be detected to better guide the vehicle 101 to travel.

In embodiments of this application, the serving end 102 can perform feature extraction based on a road image, to obtain a plurality of layers of feature maps, where the feature map includes road surface feature information. The serving end 102 performs merging on the plurality of layers of feature maps, to obtain a plurality of two-dimensional instance features respectively corresponding to the plurality of layers of feature maps, and then performs prediction based on the plurality of two-dimensional instance features, to obtain a road surface obstacle target in the road image.

According to the target detection method provided in embodiments of this application, a target detection rate and accuracy can be improved.

Embodiments of this application may be applied to a visual perception system of an advanced driving assistance system (Advanced Driving Assistance System, ADAS) or an autonomous driving system (Autonomous Driving System, ADS), and may also be applied to a vehicle-mounted visual perception device and a perception device like a security protection device. This is not strictly limited in this solution.

The foregoing describes the architecture of embodiments of this application. The following describes the method in embodiments of this application in detail.

FIG. 2 is a schematic flowchart of a target detection method according to an embodiment of this application. Optionally, the method may be applied to the foregoing target detection system, for example, the target detection system shown in FIG. 1. The target detection method shown in FIG. 2 may include steps 201 to 203. It should be understood that, for ease of description in this application, a sequence of 201 to 203 is used for description, but this is not intended to limit execution that is necessary in the foregoing sequence. An execution sequence, an execution time point, a quantity of execution times, and the like of the foregoing one or more steps are not limited in embodiments of this application. An example in which steps 201 to 203 of the target detection method are performed by a server is used below for description. This application is also applicable to another execution body. Steps 201 to 203 are specifically as follows.

201: Perform feature extraction on an input image, to obtain a plurality of layers of feature maps, where the feature map includes road surface feature information, and downsampling rates of the plurality of layers of feature maps are different.

The input image is an image including a road. The input image may be sent by a vehicle, or may be obtained by the server, for example, obtained from a roadside device. This is not limited in this solution.

The road surface feature information may be understood as road surface context information. For example, the road surface context information may include a texture, a color, and the like of a road surface.

Optionally, the feature map further includes obstacle information.

Feature extraction may be, for example, convolution or transformer processing, or may be an operation combining convolution and transformer processing.

The downsampling rates of the plurality of layers of feature maps are different, that is, scales of the plurality of layers of feature maps are different.

The plurality of layers of feature maps including the road surface feature information may be obtained by processing the input image. Because the feature map includes the road surface feature information, detection accuracy of an obstacle target in subsequent target detection is improved.

In a possible implementation, the plurality of layers of feature maps are obtained by inputting the input image to a feature extraction network for processing.

Optionally, the feature extraction network may include a backbone network backbone. The backbone network may use a plurality of forms, for example, a visual geometry group (Visual Geometry Group, VGG) network, a residual network Resnet, and an Inception-net.

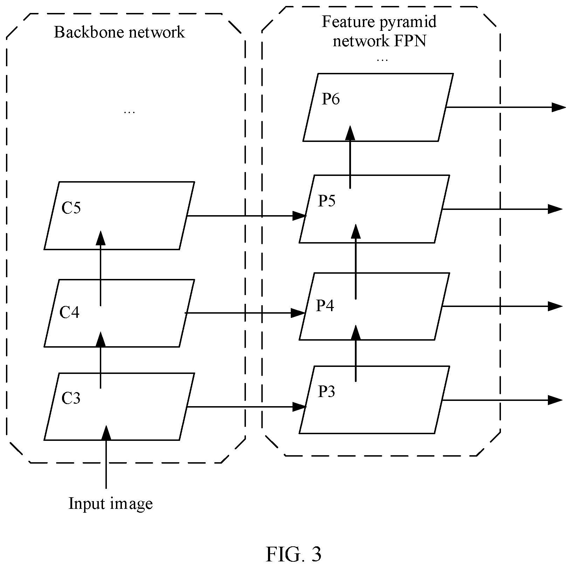

Alternatively, the feature extraction network includes a backbone network backbone and a feature pyramid network (Feature Pyramid Network, FPN). For example, architectures of the backbone network and the feature pyramid network in the feature extraction network are shown in FIG. 3. The backbone performs a series of convolution or transformer processing on the input image, to obtain features (such as C3, C4, and C5) at different scales. These features may be used as basic features for subsequent target detection.

The FPN merges internal vertical features, and merges horizontal features with horizontal features (such as C3, C4, and C5) at a same layer of the backbone, to generate more expressive feature maps (such as P3, P4, P5, and P6) for subsequent target detection. For example, downsampling rates of the feature maps P3, P4, P5, and P6 are respectively 8x, 16x, 32x, and 64x. The plurality of layers of feature maps may be understood as feature maps of different downsampling layers. A larger downsampling rate indicates a smaller size of a feature map of a layer. For example, a size of a feature map that is downsampled at 8x is 1/8 of the input image.

202: Perform merging on each layer of feature map and an upper layer of feature map in the plurality of layers of feature maps, to obtain a plurality of two-dimensional instance features respectively corresponding to the plurality of layers of feature maps.

The two-dimensional 2D instance features are 2D features of various objects in the feature map.

Because the feature map includes the road surface feature information, the two-dimensional instance feature also includes the road surface feature information.

Merging is performed on each layer of feature map in the plurality of layers of feature maps, to obtain a more robust feature. Merging may be merging an upper layer of feature map with a current layer of feature map, to obtain a two-dimensional instance feature corresponding to the current layer. By analogy, the plurality of two-dimensional instance features respectively corresponding to the plurality of layers of feature maps may be obtained. For a first layer of feature map, if an upper layer of feature map does not exist, merging is not performed.

In a possible implementation, the plurality of two-dimensional instance features respectively corresponding to the plurality of layers of feature maps may be obtained by inputting the plurality of layers of feature maps to a 2D neck network for processing. The 2D neck network is a convolutional network formed by cascading a plurality of residual networks, and is used to enhance a learning capability of the network, so that a feature is more robust.

203: Perform prediction based on the plurality of two-dimensional instance features, to obtain a road surface obstacle target in the input image.

Prediction may be understood as a process of converting the plurality of two-dimensional instance features into a detection box.

In a possible implementation, detection boxes on layers of feature maps may be output by inputting the plurality of two-dimensional instance features to the 2D head network for prediction. The 2D head network is formed by cascading several convolution layers, and is used to predict a boundary box and a confidence level of an obstacle based on each point in the feature map.

Then, a final detection box may be obtained based on the detection boxes on the plurality of layers of feature maps, and a location corresponding to the final detection box is a location of the road surface obstacle target in the input image. For example, with reference to the detection boxes on the layers of feature maps, the final detection box can be obtained by removing an overlapping detection box through non-maximum suppression and filtering out a detection box less than a confidence threshold.

The road surface obstacle target may be a non-whitelist obstacle, or may be a whitelist obstacle. This is not limited in this solution.

According to this solution, accuracy of the road surface obstacle target obtained by performing processing based on the feature map including the road surface feature information is high.

In a possible implementation, before step 203, the method further includes:
performing processing based on the plurality of layers of feature maps and the plurality of two-dimensional instance features, to obtain a road surface segmentation mask mask.

The road surface segmentation mask is a binary map of road surface prediction.

For example, road surface context information merging is performed on the plurality of layers of feature maps based on the plurality of layers of feature maps and the plurality of two-dimensional instance features, to obtain a plurality of road surface features respectively corresponding to the plurality of layers of feature maps. Then, the road surface segmentation mask is obtained based on the plurality of road surface features respectively corresponding to the plurality of layers of feature maps.

For an i^{th} layer of feature map, merging is performed based on the i^{th} layer of feature map and a road surface feature corresponding to an (i-1)^{th} layer of feature map, to obtain a merged feature.

Merging is performed on the merged feature and a two-dimensional instance feature corresponding to the i^{th} layer of feature map, to obtain a road surface feature corresponding to the i^{th} layer of feature map. The plurality of road surface features respectively corresponding to the plurality of layers of feature maps may be obtained by repeating the foregoing steps.

Herein, i is an integer not less than 1. When i is 1, a road surface feature corresponding to a 0^{th} layer of feature map does not exist. In other words, when merging is performed on the first layer of feature map, merging is performed on only the first layer of feature map and a two-dimensional instance feature corresponding to the first layer of feature map, to obtain the road surface feature corresponding to the first layer of feature map.

Based on the foregoing plurality of obtained road surface features, the road surface segmentation mask may be obtained by performing classification prediction on a last road surface feature.

Accordingly, step 203 may include:
performing prediction based on the plurality of two-dimensional instance features and the road surface segmentation mask, to obtain the road surface obstacle target in the input image.

For example, prediction is separately performed based on the plurality of two-dimensional instance features, to obtain a plurality of detection boxes. Then, an initial prediction box can be obtained by removing the overlapping detection box through non-maximum suppression and filtering out the detection box less than the confidence threshold.

Then, whether a central point of the initial prediction box is on the road surface is determined based on the initial prediction box and the road surface segmentation mask. If the central point of the initial prediction box is on the road surface, the initial prediction box is used as the road surface obstacle target in the input image. That is, an object in the initial prediction box is the road surface obstacle target.

If the central point of the initial prediction box is not on the road surface, it indicates that the initial prediction box is not the road surface obstacle target. The initial prediction box is discarded, and detection prediction is considered as invalid.

In this example, an obstacle that is not on the road surface is filtered based on the road surface segmentation mask. This can further reduce a false detection rate.

In this embodiment of this application, feature extraction is performed on the input image, to obtain the plurality of feature maps including the road surface feature information. Then, merging is performed on the plurality of layers of feature maps, to obtain the plurality of two-dimensional instance features. The road surface obstacle target is obtained based on the plurality of two-dimensional instance features. In this means, target prediction is performed based on the feature map including the road surface feature information. The road surface context information is considered, so that accuracy of target detection can be improved.

In addition to a problem of accuracy, detection of a non-whitelist obstacle also faces the following challenge. Categories of non-whitelist obstacles are not clearly defined. The non-whitelist obstacle is any object that may appear on the road and that is not a whitelist obstacle. It is unrealistic to simply enumerate all possible objects. There are always obstacles that accidentally appear on the road, such as a television and a refrigerator. Therefore, during target detection, a server needs be able to understand "an abnormal object on the road". This is the core way to solve universality of the non-whitelist obstacle.

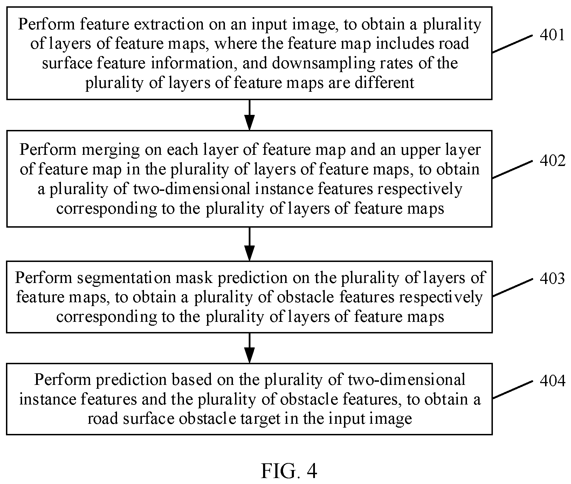

Based on this, an embodiment of this application further provides another target detection method. Refer to FIG. 4. The method may be applied to the foregoing target detection system, for example, the target detection system shown in FIG. 1. The target detection method shown in FIG. 4 may include steps 401 to 404. It should be understood that, for ease of description in this application, a sequence of 401 to 404 is used for description, but this is not intended to limit execution that is necessary in the foregoing sequence. An execution sequence, an execution time point, a quantity of execution times, and the like of the foregoing one or more steps are not limited in embodiments of this application. An example in which steps 401 to 404 of the target detection method are performed by a server is used below for description. This application is also applicable to another execution body. Steps 401 to 404 are specifically as follows.

401: Perform feature extraction on an input image, to obtain a plurality of layers of feature maps, where the feature map includes road surface feature information, and downsampling rates of the plurality of layers of feature maps are different.

For descriptions of this part, refer to the descriptions of step 201 in the embodiment shown in FIG. 2. Details are not described herein again.

402: Perform merging on each layer of feature map and an upper layer of feature map in the plurality of layers of feature maps, to obtain a plurality of two-dimensional instance features respectively corresponding to the plurality of layers of feature maps.

For descriptions of this part, refer to the descriptions of step 202 in the embodiment shown in FIG. 2. Details are not described herein again.

403: Perform segmentation mask prediction on the plurality of layers of feature maps, to obtain a plurality of obstacle features respectively corresponding to the plurality of layers of feature maps.

For example, prediction may be performed by using a convolutional layer and an activation layer, to obtain a plurality of obstacle features (namely, an obstacle segmentation mask).

The obstacle feature is obtained, so that a category-independent general feature of a target area (namely, an area corresponding to an obstacle target in the input image) can be enhanced, and a response of a non-target area can be correspondingly reduced. This reduces false detection and improves target detection accuracy.

In a possible implementation, the plurality of obstacle features respectively corresponding to the plurality of layers of feature maps may be obtained by inputting the plurality of layers of feature maps into an obstacle feature guidance module for processing.

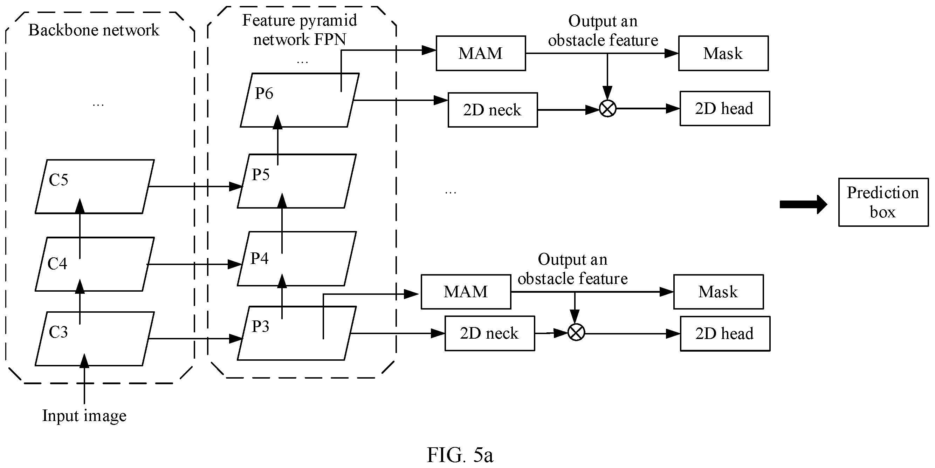

For example, as shown in FIG. 5a, the obstacle feature guidance module performs prediction on the feature map based on each feature layer by using a mask attention (Mask attention, MAM) module, to obtain a foreground segmentation mask.

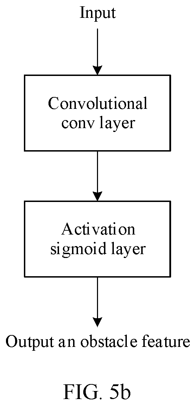

A structure of the MAM module is shown in FIG. 5b. After the feature map output by the FPN passes through the convolutional layer and the activation layer sigmoid, a mask whose dimension is 1xHxW is output, where H and W are respectively a height and a width of the feature map.

404: Perform prediction based on the plurality of two-dimensional instance features and the plurality of obstacle features, to obtain a road surface obstacle target in the input image.

In a possible implementation, merging is performed based on the plurality of two-dimensional instance features and the plurality of obstacle features, to obtain a merged feature that is of a general feature of a non-whitelist obstacle and that carries the road surface context information.

Then, the merged feature is input to a 2D head network for processing, to obtain an initial prediction box, that is, obtain the road surface obstacle target.

In this solution, processing is performed based on the feature map including the road surface feature information, and the obtained obstacle feature is combined, so that the category-independent feature of the target area can be enhanced, obstacle universality can be enhanced, and target detection accuracy can be further improved.

For example, as shown in FIG. 5a, each obstacle feature, namely, an obstacle segmentation mask, is merged with a corresponding two-dimensional instance feature, to obtain a merged feature. Then, merged features are separately input to the 2D head network for processing, that is, the road surface obstacle target is obtained.

Optionally, prediction is performed based on the plurality of two-dimensional instance features, to obtain the initial prediction box and a first confidence level.

Whether a central point of the initial prediction box is in the obstacle segmentation mask is determined based on the obstacle feature (obstacle segmentation mask).

If the central point of the initial prediction box is in the obstacle segmentation mask, the first confidence level is updated to a second confidence level, where the second confidence level is greater than the first confidence level. For example, the first confidence level is multiplied by a coefficient greater than 1, to obtain the second confidence level. If the second confidence level is greater than a preset value, the road surface obstacle target in the input image is determined based on the initial prediction box.

If the central point of the initial prediction box is not in the obstacle segmentation mask, the first confidence level is updated to a third confidence level, where the third confidence level is less than the first confidence level. For example, the first confidence level is multiplied by a coefficient less than 1, to obtain the third confidence level. If the third confidence level is greater than a preset filtering value, the road surface obstacle target in the input image is determined based on the initial prediction box. If the third confidence level is not greater than the filtering preset value, the initial prediction box is discarded, and detection prediction is considered as invalid.

In this example, matching is performed based on a preset confidence level value of the obstacle segmentation mask and a confidence level obtained based on the two-dimensional instance feature. This can further reduce a false detection rate.

In this embodiment of this application, feature extraction is performed on the input image, to obtain the plurality of feature maps including the road surface feature information, and the plurality of two-dimensional instance features and the plurality of obstacle features are obtained based on the plurality of feature maps. Further, the road surface obstacle target is obtained based on the plurality of two-dimensional instance features and the plurality of obstacle features. In this means, processing is performed based on the feature map including the road surface feature information, and in combination with the obtained obstacle feature, the road surface context information is considered, and the category-independent feature of the target area is enhanced, to achieve an objective of enhancing obstacle universality. In this way, accuracy of target detection can be further improved.

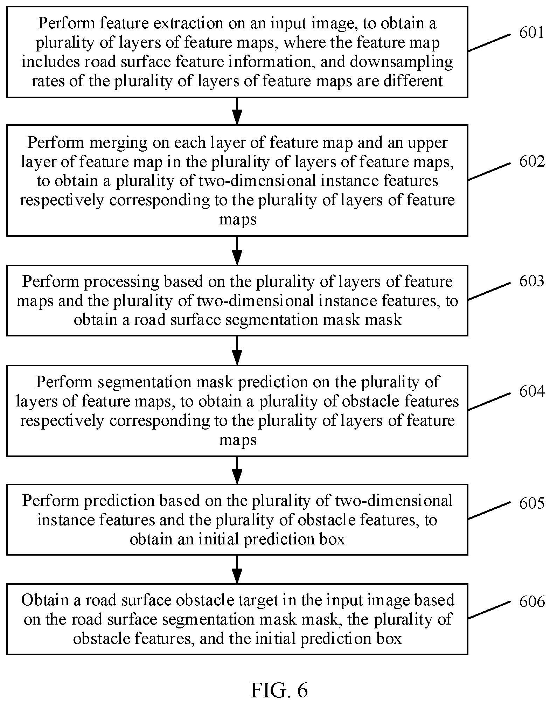

Based on the foregoing embodiments, FIG. 6 is a schematic flowchart of still another target detection method according to an embodiment of this application. Optionally, the method may be applied to the foregoing target detection system, for example, the target detection system shown in FIG. 1. The target detection method shown in FIG. 6 may include steps 601 to 606. It should be understood that, for ease of description in this application, a sequence of 601 to 606 is used for description, but this is not intended to limit execution that is necessary in the foregoing sequence. An execution sequence, an execution time point, a quantity of execution times, and the like of the foregoing one or more steps are not limited in embodiments of this application. An example in which steps 601 to 606 of the target detection method are performed by a server is used below for description. This application is also applicable to another execution body. Steps 601 to 606 are specifically as follows.

601: Perform feature extraction on an input image, to obtain a plurality of layers of feature maps, where the feature map includes road surface feature information, and downsampling rates of the plurality of layers of feature maps are different.

For descriptions of step 601, refer to the descriptions of step 201 in the embodiment shown in FIG. 2. Details are not described herein again.

602: Perform merging on each layer of feature map and an upper layer of feature map in the plurality of layers of feature maps, to obtain a plurality of two-dimensional instance features respectively corresponding to the plurality of layers of feature maps.

For descriptions of step 602, refer to the descriptions of step 202 in the embodiment shown in FIG. 2. Details are not described herein again.

603: Perform processing based on the plurality of layers of feature maps and the plurality of two-dimensional instance features, to obtain a road surface segmentation mask mask.

For descriptions of step 603, refer to the descriptions of step 203 in the embodiment shown in FIG. 2. Details are not described herein again.

604: Perform segmentation mask prediction on the plurality of layers of feature maps, to obtain a plurality of obstacle features respectively corresponding to the plurality of layers of feature maps.

For descriptions of step 604, refer to the descriptions of step 403 in the embodiment shown in FIG. 4. Details are not described herein again.

605: Perform prediction based on the plurality of two-dimensional instance features and the plurality of obstacle features, to obtain an initial prediction box.

In a possible implementation, merging is performed based on the plurality of two-dimensional instance features and the plurality of obstacle features, to obtain a merged feature that is of a general feature of a non-whitelist obstacle and that carries the road surface context information.

Then, the merging feature is input to a 2D head network for processing, to obtain the initial prediction box and a first confidence level.

For descriptions of this part, refer to the descriptions of step 404 in the embodiment shown in FIG. 4. Details are not described herein again.

606: Obtain a road surface obstacle target in the input image based on the road surface segmentation mask mask, the plurality of obstacle features, and the initial prediction box.

Optionally, filtering is performed on the initial prediction box based on the road surface segmentation mask mask and the plurality of obstacle features (obstacle segmentation mask), to filter out an obstacle that is not on a road surface. In this way, a false detection rate can be further reduced.

Specifically, merging is first performed on the initial prediction box based on the plurality of obstacle segmentation masks, to determine whether a central point of the initial prediction box falls within a range of a plurality of obstacle segmentation masks. If the central point of the initial prediction box is outside the range of the obstacle segmentation mask, the first confidence level is updated to a third confidence level, where the third confidence level is less than the first confidence level. For example, the first confidence level is multiplied by a coefficient less than 1, to obtain the third confidence level. If the third confidence level is not greater than a filtering preset value, the initial prediction box is discarded, and detection prediction is considered as invalid.

If the central point of the initial prediction box falls within the range of the obstacle segmentation mask, the first confidence level is updated to a second confidence level, where the second confidence level is greater than the first confidence level. For example, the first confidence level is multiplied by a coefficient greater than 1, to obtain the second confidence level.

If the second confidence level is greater than a preset value, or if the third confidence level is greater than the preset filtering value, whether the central point of the initial prediction box is in the range of the road surface segmentation mask is determined. If the central point of the initial prediction box is in the range of the road surface segmentation mask, an output of detection prediction is retained. Otherwise, the output of detection prediction is discarded, and detection prediction is considered as invalid.

In this example, a confidence level of an obstacle is adjusted based on a location relationship between the obstacle segmentation mask and the initial prediction box, to reduce false detection outside a foreground area. In addition, with reference to the location relationship between the road surface segmentation mask and the initial prediction box, it is ensured that the obstacle is on the road surface. This further reduces the false detection rate.

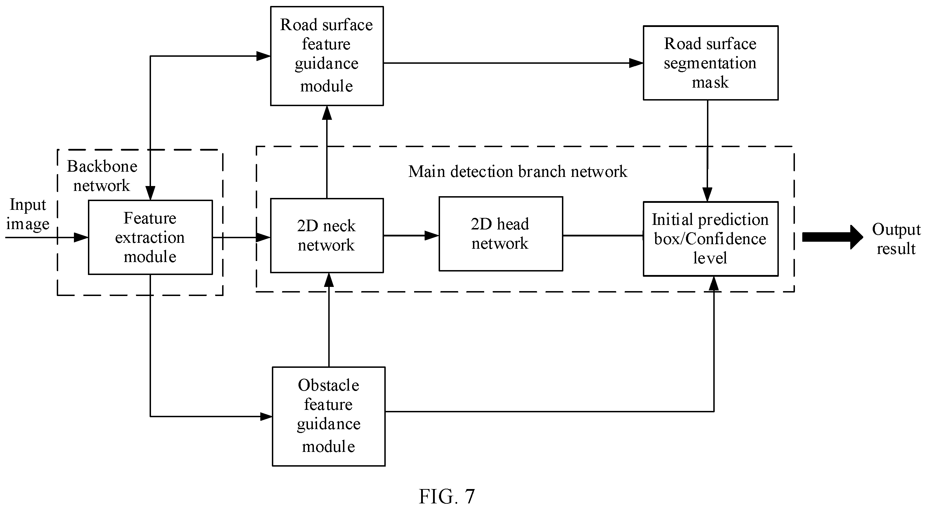

As shown in FIG. 7, the road surface obstacle target may be obtained by inputting the input image to a prediction model for processing. The prediction model includes a backbone network and a main detection branch network, and the main detection branch network includes a neck network and a head network. The backbone network performs feature extraction on the input image, to obtain the plurality of layers of feature maps including the road surface feature information. In addition, an obstacle guidance module processes the plurality of layers of feature maps, to obtain the plurality of obstacle features. Then, the neck network (for example, a 2D neck network) processes the input plurality of layers of feature maps, to obtain the plurality of two-dimensional instance features. The head network (for example, a 2D head network) processes the plurality of two-dimensional instance features and the plurality of obstacle features, to obtain the initial prediction box. Finally, a determined final prediction box is used as an output result based on the road surface segmentation mask obtained by using the plurality of two-dimensional instance features and the plurality of layers of feature maps, the plurality of obstacle features, and the initial prediction box.

In this embodiment of this application, feature extraction is performed on the input image, to obtain the plurality of feature maps including the road surface feature information. The plurality of two-dimensional instance features and the plurality of obstacle features are obtained based on the plurality of layers of feature maps, the merging feature of the general feature that is of the non-whitelist obstacle and that carries the road surface context information may be obtained, and then prediction is performed based on the merging feature, to obtain the initial prediction box. In this way, target detection accuracy can be improved. In addition, filtering is further performed on the initial prediction box with reference to the road surface segmentation mask and the obstacle feature, to filter out the obstacle that is not on the road surface. In this way, the false detection rate can be further reduced.

The target detection method is described in the foregoing embodiment. The following describes the prediction model in embodiments of this application.

The road surface obstacle target in the input image may be obtained by inputting the image into the prediction model for processing. The prediction model includes a backbone network and a main detection branch network, and the main detection branch network includes a neck network and a head network.

In a possible implementation, in step 201, step 401, and step 601, the performing feature extraction on an input image, to obtain a plurality of layers of feature maps is implemented through the backbone network.

In this example, feature extraction is implemented through the backbone network. Certainly, the feature extraction network may further include the FPN. This s not limited in this solution.

For descriptions of the backbone network backbone, refer to the descriptions of the example shown in FIG. 3. Details are not described herein again.

In a possible implementation, in step 202, step 402, and step 602, the performing merging on each layer of feature map and an upper layer of feature map in the plurality of layers of feature maps, to obtain a plurality of two-dimensional instance features respectively corresponding to the plurality of layers of feature maps is implemented through the neck network.

For descriptions of the neck network, refer to the descriptions of the example shown in FIG. 2. Details are not described herein again.

In a possible implementation, in step 203, the performing prediction based on the plurality of two-dimensional instance features, to obtain a road surface obstacle target in the input image is implemented through the head network.

For descriptions of the head network, refer to the descriptions of the example shown in FIG. 2. Details are not described herein again.

In a possible implementation, the backbone network and the neck network are obtained through training in the following manner:
for a k^{th} time of training, inputting a sample image to a backbone network Zₖ for feature extraction, to obtain a plurality of sample feature maps of the sample image, where k is an integer not less than 1;
inputting the plurality of sample feature maps to a neck network Nₖ for merging, to obtain a plurality of two-dimensional instance features respectively corresponding to the plurality of sample feature maps;
obtaining a predicted value of the road surface segmentation mask based on the plurality of two-dimensional instance features and the plurality of sample feature maps;
calculating a loss value based on a labeling value and the predicted value, and calculating a gradient based on the loss value; and
adjusting parameters of the backbone network Zₖ and the neck network Nₖ based on the gradient, setting k=k+1, repeating the foregoing steps until k reaches a preset quantity of times, using the backbone network Zₖ as the backbone network, and using the neck network Nₖ as the neck network.

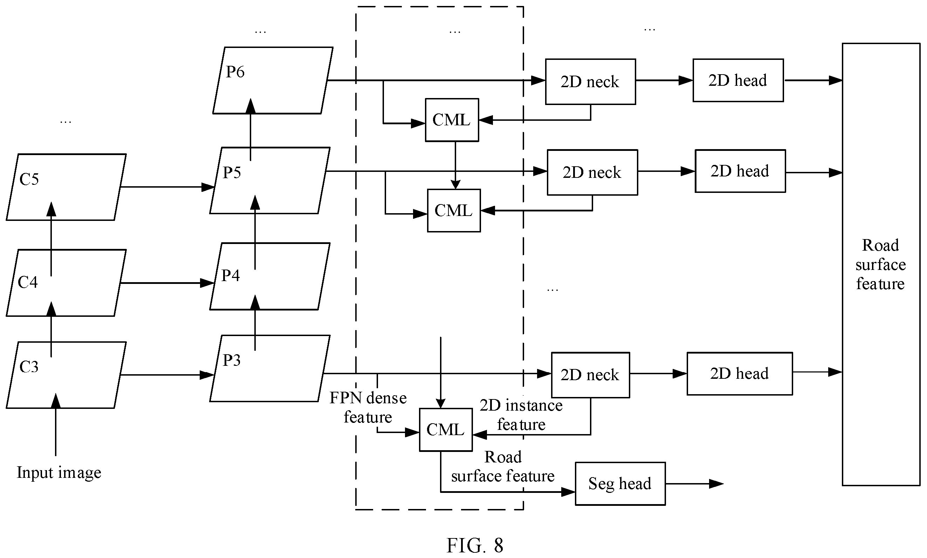

FIG. 8 is a diagram of a type of model processing according to an embodiment of this application. A module shown in a dashed line box in FIG. 8 may be the road surface feature guidance module in FIG. 7, and is configured to generate a road surface feature, so that a backbone network (a feature extraction module) and a neck network (a 2D neck network) learn road surface feature information. The module merges 2D instance features at different feature layers of the 2D neck network in a main detection branch and a dense feature in an FPN through a road surface context merging layer (Context Merging Layer, CML), to generate the road surface feature, and uses, during training, road surface segmentation mask data for supervision, so that the backbone and the FPN can extract a road feature, and implicitly encode road surface context information into the neck network of the main detection branch. In this way, a feature of the main detection branch has the road surface context information (namely, the road surface feature information).

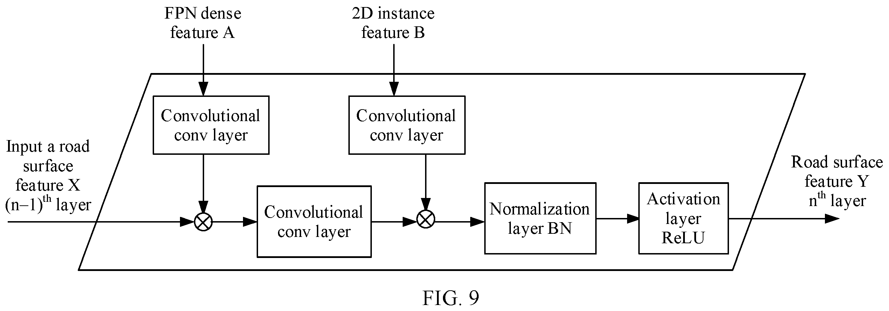

A structure of the road surface context merging layer CML is shown in FIG. 9. For each layer, an FPN dense feature (namely, an output feature map of the FPN) is merged, after being processed by a convolutional layer, with a road surface feature of an upper layer by using a point multiplication operation. A merged feature is processed by the convolutional layer, then is merged, by using the point multiplication operation, with a 2D instance feature processed by the convolutional layer, and finally is processed a batch normalization (Batch normalization, BN) layer and a rectified linear unit (Rectified linear unit, ReLu) activation layer, to output a road surface feature of the layer.

The dense feature A is a code of an FPN feature map, and the 2D instance feature B is a code of a feature output through 2D neck detection. Size scales of the FPN dense feature A and the 2D instance feature B is the same as a size scale of the road surface feature X. After the foregoing merging operation, the context merging layer finally encodes the road surface context information into the 2D instance feature through implicit learning. In this way, more robust and rich features can be provided for a subsequent target detection task.

The prediction model provided in this embodiment of this application merges, through learning, the 2D instance features at different feature layers of the 2D neck network in the main detection branch and the dense feature in the FPN based on the road surface context merging layer CML, to generate the road surface feature, and uses, during training, the road surface segmentation mask data for supervision, so that the backbone and the FPN can extract the road feature, and implicitly encode the road surface context information into the neck network of the main detection branch. In this way, the feature of the main detection branch has the road surface feature information. In this way, more robust and rich features can be provided for the subsequent target detection task, and target detection accuracy can be improved.

It should be noted that, in various embodiments of this application, unless otherwise stated or there is a logic conflict, terms and/or descriptions in various embodiments are consistent and may be mutually referenced, and technical features in different embodiments may be combined based on an internal logical relationship thereof, to form a new embodiment.

The methods in embodiments of this application are described in detail above, and apparatuses in embodiments of this application are provided below. It may be understood that, in the apparatus embodiments of this application, division into a plurality of units or modules is merely logical division based on functions, and is not intended to limit a specific structure of the apparatus. In specific implementation, some functional modules may be subdivided into more functional modules that are smaller, and some functional modules may also be combined into one functional module. However, regardless of whether these functional modules are subdivided or combined, general procedures performed by the apparatus are the same. For example, some apparatuses include a receiving unit and a sending unit. In some designs, the sending unit and the receiving unit may alternatively be integrated into a communication unit, and the communication unit may implement functions implemented by the receiving unit and the sending unit. Usually, each unit corresponds to respective program code (or program instructions). When the program code corresponding to the unit is run on a processor, the unit is controlled by the processing unit to perform a corresponding procedure to implement a corresponding function.

An embodiment of this application further provides an apparatus configured to implement any one of the foregoing methods. For example, a target detection apparatus is provided, including modules (or means) configured to implement steps performed by a server in any one of the foregoing methods.

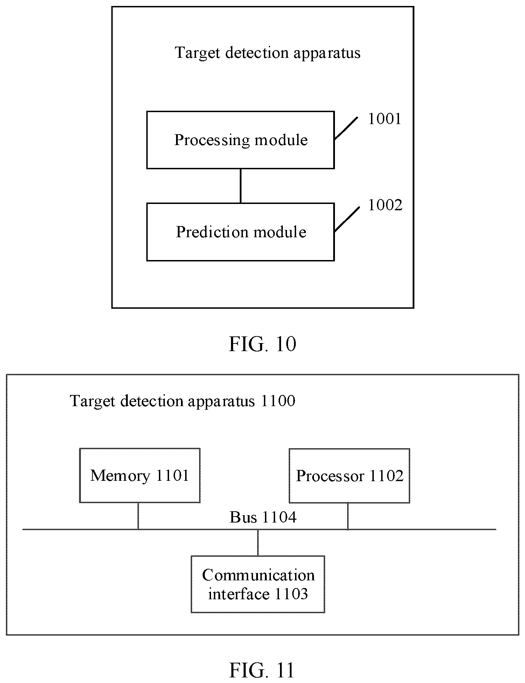

For example, FIG. 10 is a diagram of a structure of a target detection apparatus according to an embodiment of this application. The target detection apparatus is configured to implement the foregoing target detection method, for example, the target detection method shown in FIG. 2, FIG. 4, or FIG. 6.

As shown in FIG. 10, the apparatus may include a processing module 1001 and a prediction module 1002, which are specifically as follows.

The processing module 1001 is configured to perform feature extraction on an input image, to obtain a plurality of layers of feature maps, where the feature map includes road surface feature information, and downsampling rates of the plurality of layers of feature maps are different.

The processing module 1001 is further configured to perform merging on each layer of feature map and an upper layer of feature map in the plurality of layers of feature maps, to obtain a plurality of two-dimensional instance features respectively corresponding to the plurality of layers of feature maps.

The prediction module 1002 is configured to perform prediction based on the plurality of two-dimensional instance features, to obtain a road surface obstacle target in the input image.

In a possible implementation, the processing module 1001 is further configured to:
perform processing based on the plurality of layers of feature maps and the plurality of two-dimensional instance features, to obtain a road surface segmentation mask mask.

The prediction module 1002 is further configured to:
perform prediction based on the plurality of two-dimensional instance features and the road surface segmentation mask, to obtain the road surface obstacle target in the input image.

In a possible implementation, the processing module 1001 is further configured to:
obtain, based on the plurality of layers of feature maps and the plurality of two-dimensional instance features, a plurality of road surface features respectively corresponding to the plurality of layers of feature maps;
for an i^{th} layer of feature map, perform merging based on the i^{th} layer of feature map and a road surface feature corresponding to an (i-1)^{th} layer of feature map, to obtain a merged feature;
perform merging on the merged feature and a two-dimensional instance feature corresponding to the i^{th} layer of feature map, to obtain the road surface feature corresponding to the i^{th} layer of feature map, where the plurality of road surface features respectively corresponding to the plurality of layers of feature maps include the road surface feature corresponding to the i^{th} layer of feature map, i is an integer not less than 1, and when i is 1, a road surface feature corresponding to a 0^{th} layer of feature map does not exist; and
obtain the road surface segmentation mask based on the plurality of road surface features respectively corresponding to the plurality of layers of feature maps.

In a possible implementation, the prediction module 1002 is further configured to:
perform prediction based on the plurality of two-dimensional instance features, to obtain an initial prediction box;
determine, based on the road surface segmentation mask, whether a central point of the initial prediction box is on a road surface; and
if the central point of the initial prediction box is on the road surface, use the initial prediction box as the road surface obstacle target in the input image.

In a possible implementation, the processing module 1001 is further configured to:
perform segmentation mask prediction on the plurality of layers of feature maps, to obtain a plurality of obstacle features respectively corresponding to the plurality of layers of feature maps.

The prediction module 1002 is further configured to:
perform prediction based on the plurality of two-dimensional instance features and the plurality of obstacle features, to obtain the road surface obstacle target in the input image.

In a possible implementation, the prediction module 1002 is further configured to:
perform prediction based on the plurality of two-dimensional instance features, to obtain the initial prediction box and a first confidence level;
determine based on the plurality of obstacle features, whether the central point of the initial prediction box falls within an obstacle;
if the central point of the initial prediction box falls within the obstacle, update the first confidence level to a second confidence level, where the second confidence level is greater than the first confidence level; and
if the second confidence level is greater than a preset value, determine the road surface obstacle target in the input image based on the initial prediction box.

In a possible implementation, the prediction module 1002 is further configured to:
use the initial prediction box as the road surface obstacle target in the input image; or
determine, based on the road surface segmentation mask, whether the central point of the initial prediction box is on the road surface, where the road surface segmentation mask is obtained by performing processing based on the plurality of layers of feature maps and the plurality of two-dimensional instance features; and
if the central point of the initial prediction box is on the road surface, use the initial prediction box as the road surface obstacle target in the input image.

In a possible implementation, the processing module 1001 includes a backbone network and a main detection branch network, and the main detection branch network includes a neck network and a head network.

The performing feature extraction on an input image, to obtain a plurality of layers of feature maps is implemented through the backbone network;

The performing merging on each layer of feature map and an upper layer of feature map in the plurality of layers of feature maps, to obtain a plurality of two-dimensional instance features respectively corresponding to the plurality of layers of feature maps is implemented through the neck network.

The performing prediction based on the plurality of two-dimensional instance features, to obtain a road surface obstacle target in the input image is implemented through the head network.

In a possible implementation, the backbone network and the neck network are obtained through training in the following manner:
for a k^{th} time of training, inputting a sample image to a backbone network Zₖ for feature extraction, to obtain a plurality of sample feature maps of the sample image, where k is an integer not less than 1;
inputting the plurality of sample feature maps to a neck network Nₖ for merging, to obtain a plurality of two-dimensional instance features respectively corresponding to the plurality of sample feature maps;
obtaining a predicted value of the road surface segmentation mask based on the plurality of two-dimensional instance features and the plurality of sample feature maps;
calculating a loss value based on a labeling value and the predicted value, and calculating a gradient based on the loss value; and
adjusting parameters of the initial backbone network Zₖ and the initial neck network Nₖ based on the gradient, setting k=k+1, repeating the foregoing steps until k reaches a preset quantity of times, using the backbone network Zₖ as the backbone network, and using the neck network Nₖ as the neck network.

For descriptions of the foregoing modules, refer to the descriptions of the foregoing embodiments. Details are not described herein again.

It should be understood that division of the modules in the foregoing apparatuses is merely logical function division. During actual implementation, all or some of the modules may be integrated into one physical entity, or may be physically separated. In addition, the module in the target detection apparatus may be implemented in a form of software invoked by a processor. For example, the target detection apparatus includes a processor. The processor is connected to a memory. The memory stores instructions, and the processor invokes the instructions stored in the memory, to implement any one of the foregoing methods or functions of each module in the apparatus. The processor is, for example, a general-purpose processor, for example, a central processing unit (central processing unit, CPU) or a microprocessor. The memory is a memory inside the apparatus or a memory outside the apparatus. Alternatively, the module in the apparatus may be implemented in a form of a hardware circuit, and functions of some or all units may be implemented by designing the hardware circuits. The hardware circuits may be understood as one or more processors. For example, in an implementation, the hardware circuit is an application-specific integrated circuit (application-specific integrated circuit, ASIC), and the functions of some or all of the foregoing units are implemented by designing a logical relationship between elements in the circuit. For another example, in another implementation, the hardware circuit may be implemented by using a programmable logic device (programmable logic device, PLD). A field programmable gate array (field programmable gate array, FPGA) is used as an example, and the field programmable gate array may include a large quantity of logic gate circuits. A configuration file is used to configure a connection relationship between logic gate circuits, to implement functions of some or all of the foregoing units. All modules of the foregoing apparatuses may be implemented in a form of software invoked by the processor, or all modules may be implemented in a form of the hardware circuit, or some modules may be implemented in a form of software invoked by the processor, and a remaining part may be implemented in a form of the hardware circuit.

FIG. 11 is a diagram of a hardware structure of another target detection apparatus according to an embodiment of this application. A target detection apparatus 1100 (the apparatus 1100 may be specifically a computer device) shown in FIG. 11 includes a memory 1101, a processor 1102, a communication interface 1103, and a bus 1104. The memory 1101, the processor 1102, and the communication interface 1103 are communicatively connected to each other through the bus 1104.

The memory 1101 may be a read-only memory (read only memory, ROM), a static storage device, a dynamic storage device, or a random access memory (random access memory, RAM).

The memory 1101 may store a program. When the program stored in the memory 1101 is executed by the processor 1102, the processor 1102 and the communication interface 1103 are configured to perform the steps of the target detection method in embodiments of this application.

The processor 1102 is a circuit having a signal processing capability. In an implementation, the processor 1102 may be a circuit having an instruction reading and running capability, for example, a central processing unit CPU, a microprocessor, a graphics processing unit (graphics processing unit, GPU) (which may be understood as a microprocessor), or a digital signal processor (digital signal processor, DSP). In another implementation, the processor 1102 may implement a specific function by using a logical relationship of a hardware circuit, and the logical relationship of the hardware circuit is fixed or reconfigurable. For example, the processor 1102 is a hardware circuit implemented by an ASIC or a programmable logic device PLD, for example, an FPGA. In the reconfigurable hardware circuit, a process in which the processor loads a configuration document to implement hardware circuit configuration may be understood as a process in which the processor loads an instruction to implement functions of some or all of the foregoing modules. In addition, the processor may be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). The processor 1102 is configured to execute a related program, to implement functions that need to be performed by the units in the target detection apparatus in embodiments of this application, or perform the target detection method in the method embodiments of this application.

It can be learned that each module in the foregoing apparatus may be one or more processors (or processing circuits) configured to implement the foregoing method, for example, a CPU, a GPU, an NPU, a TPU, a DPU, a microprocessor, a DSP, an ASIC, an FPGA, or a combination of at least two of these processor forms.

In addition, all or some of the modules of the apparatus may be integrated, or may be implemented independently. In an implementation, the modules may be integrated together and implemented in a form of a system-on-a-chip (system-on-a-chip, SOC). The SOC may include at least one processor, configured to implement any one of the methods or implement functions of the modules of the apparatus. Types of the at least one processor may be different, for example, the at least one processor includes a CPU and an FPGA, a CPU and an artificial intelligence processor, or a CPU and a GPU.

The communication interface 1103 uses a transceiver apparatus, including but not limited to, for example, a transceiver, to implement communication between the apparatus 1100 and another device or a communication network. For example, data may be obtained through the communication interface 1103.

The bus 1104 may include a path for transmitting information between components (such as the memory 1101, the processor 1102, and the communication interface 1103) in the apparatus 1100.

It should be noted that although the apparatus 1100 shown in FIG. 11 shows only the memory, the processor, and the communication interface, in a specific implementation process, a person skilled in the art should understand that the apparatus 1100 further includes another component necessary for normal operation. In addition, based on a specific requirement, a person skilled in the art should understand that the apparatus 1100 may further include a hardware component for implementing another additional function. In addition, a person skilled in the art should understand that the apparatus 1100 may alternatively include only a component required for implementing embodiments of this application, and does not need to include all components shown in FIG. 11.

An embodiment of this application further provides a computer-readable storage medium. The computer-readable storage medium stores instructions. When the instructions are run on a computer or a processor, the computer or the processor is enabled to perform one or more steps in any one of the foregoing methods.

An embodiment of this application further provides a computer program product including instructions. When the computer program product is run on a computer or a processor, the computer or the processor is enabled to perform one or more steps in any one of the foregoing methods.

It should be understood that unless otherwise specified, "/" in descriptions of this application indicates an "or" relationship between associated objects. For example, A/B may indicate A or B. A and B may be singular or plural. In addition, in the descriptions of this application, "a plurality of" means two or more than two unless otherwise specified. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in the embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as "example" or "for example" in embodiments of this application should not be explained as being more preferred or having more advantages than another embodiment or design scheme. Exactly, use of the terms such as "example" or "for example" is intended to present a related concept in a specific manner for ease of understanding.

In the several embodiments provided in this application, it should be understood that the disclosed system, apparatus, and method may be implemented in other manners. For example, division into the units is merely logical function division and may be another division in actual implementation. For example, a plurality of units or components may be combined or integrated into another system, or some features may be ignored or not performed. The displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium, or transmitted through the computer-readable storage medium. The computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a read-only memory (read-only memory, ROM), a random access memory (random access memory, RAM), or a magnetic medium, for example, a floppy disk, a hard disk, a magnetic tape, a magnetic disk, or an optical medium, for example, a digital versatile disc (digital versatile disc, DVD), or a semiconductor medium, for example, a solid-state disk (solid-state disk, SSD).

The foregoing descriptions are merely specific implementations of embodiments of this application, but are not intended to limit the protection scope of embodiments of this application. Any variation or replacement within the technical scope disclosed in embodiments of this application shall fall within the protection scope of embodiments of this application. Therefore, the protection scope of the embodiments of this application shall be subject to the protection scope of the claims.

## Claims

1. A target detection method, comprising:
performing feature extraction on an input image, to obtain a plurality of layers of feature maps, wherein the feature map comprises road surface feature information, and downsampling rates of the plurality of layers of feature maps are different;
performing merging on each layer of feature map and an upper layer of feature map in the plurality of layers of feature maps, to obtain a plurality of two-dimensional instance features respectively corresponding to the plurality of layers of feature maps; and
performing prediction based on the plurality of two-dimensional instance features, to obtain a road surface obstacle target in the input image.

2. The method according to claim 1, wherein the method further comprises:
performing processing based on the plurality of layers of feature maps and the plurality of two-dimensional instance features, to obtain a road surface segmentation mask; and
the performing prediction based on the plurality of two-dimensional instance features, to obtain a road surface obstacle target in the input image comprises:
performing prediction based on the plurality of two-dimensional instance features and the road surface segmentation mask, to obtain the road surface obstacle target in the input image.

3. The method according to claim 2, wherein the performing processing based on the plurality of layers of feature maps and the plurality of two-dimensional instance features, to obtain a road surface segmentation mask mask comprises:
obtaining, based on the plurality of layers of feature maps and the plurality of two-dimensional instance features, a plurality of road surface features respectively corresponding to the plurality of layers of feature maps;
for an i^{th} layer of feature map, performing merging based on the i^{th} layer of feature map and a road surface feature corresponding to an (i-1)^{th} layer of feature map, to obtain a merged feature;
performing merging on the merged feature and a two-dimensional instance feature corresponding to the i^{th} layer of feature map, to obtain a road surface feature corresponding to the i^{th} layer of feature map, wherein the plurality of road surface features respectively corresponding to the plurality of layers of feature maps comprise the road surface feature corresponding to the i^{th} layer of feature map, i is an integer not less than 1, and when i is 1, a road surface feature corresponding to a 0^{th} layer of feature map does not exist; and
obtaining the road surface segmentation mask based on the plurality of road surface features respectively corresponding to the plurality of layers of feature maps.

4. The method according to claim 2 or 3, wherein the performing prediction based on the plurality of two-dimensional instance features and the road surface segmentation mask, to obtain the road surface obstacle target in the input image comprises:
performing prediction based on the plurality of two-dimensional instance features, to obtain an initial prediction box;
determining, based on the road surface segmentation mask, whether a central point of the initial prediction box is on a road surface; and
if the central point of the initial prediction box is on the road surface, using the initial prediction box as the road surface obstacle target in the input image.

5. The method according to any one of claims 1 to 4, wherein the method further comprises:
performing segmentation mask prediction on the plurality of layers of feature maps, to obtain a plurality of obstacle features respectively corresponding to the plurality of layers of feature maps; and
the performing prediction based on the plurality of two-dimensional instance features, to obtain a road surface obstacle target in the input image comprises:
performing prediction based on the plurality of two-dimensional instance features and the plurality of obstacle features, to obtain the road surface obstacle target in the input image.

6. The method according to claim 5, wherein the performing prediction based on the plurality of two-dimensional instance features and the plurality of obstacle features, to obtain the road surface obstacle target in the input image comprises:
performing prediction based on the plurality of two-dimensional instance features, to obtain the initial prediction box and a first confidence level;
determining, based on the plurality of obstacle features, whether the central point of the initial prediction box falls within an obstacle;
if the central point of the initial prediction box falls within the obstacle, updating the first confidence level to a second confidence level, wherein the second confidence level is greater than the first confidence level; and
if the second confidence level is greater than a preset value, determining the road surface obstacle target in the input image based on the initial prediction box.

7. The method according to claim 6, wherein the determining the road surface obstacle target in the input image based on the initial prediction box comprises:
using the initial prediction box as the road surface obstacle target in the input image; or
determining, based on the road surface segmentation mask, whether the central point of the initial prediction box is on the road surface, wherein the road surface segmentation mask is obtained by performing processing based on the plurality of layers of feature maps and the plurality of two-dimensional instance features; and
if the central point of the initial prediction box is on the road surface, using the initial prediction box as the road surface obstacle target in the input image.

8. The method according to any one of claims 1 to 7, wherein a prediction model comprises a backbone network and a main detection branch network, and the main detection branch network comprises a neck network and a head network;
the performing feature extraction on the input image, to obtain the plurality of layers of feature maps is implemented through the backbone network;
the performing merging on each layer of feature map and an upper layer of feature map in the plurality of layers of feature maps, to obtain a plurality of two-dimensional instance features respectively corresponding to the plurality of layers of feature maps is implemented through the neck network; and
the performing prediction based on the plurality of two-dimensional instance features, to obtain a road surface obstacle target in the input image is implemented through the head network.

9. The method according to claim 8, wherein the backbone network and the neck network are obtained through training in the following manner:
for a k^{th} time of training, inputting a sample image to a backbone network Zₖ for feature extraction, to obtain a plurality of layers of sample feature maps of the sample image, wherein k is an integer not less than 1;
inputting the plurality of layers of sample feature maps to a neck network Nₖ for merging, to obtain a plurality of two-dimensional instance features respectively corresponding to the plurality of layers of sample feature maps;
obtaining a predicted value of the road surface segmentation mask based on the plurality of two-dimensional instance features and the plurality of layers of sample feature maps;
calculating a loss value based on a labeling value and the predicted value, and calculating a gradient based on the loss value; and
adjusting parameters of the backbone network Zₖ and the neck network Nₖ based on the gradient, setting k=k+1, repeating the foregoing steps until k reaches a preset quantity of times, using the backbone network Zₖ as the backbone network, and using the neck network Nₖ as the neck network.

10. A target detection apparatus, comprising:
a processing module, configured to perform feature extraction on an input image, to obtain a plurality of layers of feature maps, wherein the feature map comprises road surface feature information, and downsampling rates of the plurality of layers of feature maps are different, wherein
the processing module is further configured to perform merging on each layer of feature map and an upper layer of feature map in the plurality of layers of feature maps, to obtain a plurality of two-dimensional instance features respectively corresponding to the plurality of layers of feature maps; and
a prediction module, configured to perform prediction based on the plurality of two-dimensional instance features, to obtain a road surface obstacle target in the input image.

11. The apparatus according to claim 10, wherein the processing module is further configured to:
perform processing based on the plurality of layers of feature maps and the plurality of two-dimensional instance features, to obtain a road surface segmentation mask mask; and
the prediction module is further configured to:
perform prediction based on the plurality of two-dimensional instance features and the road surface segmentation mask, to obtain the road surface obstacle target in the input image.

12. The apparatus according to claim 11, wherein the processing module is further configured to:
perform processing based on the plurality of layers of feature maps and the plurality of two-dimensional instance features, to obtain a plurality of road surface features respectively corresponding to the plurality of layers of feature maps;
for an i^{th} layer of feature map, perform merging based on the i^{th} layer of feature map and a road surface feature corresponding to an (i-1)^{th} layer of feature map, to obtain a merged feature;
perform merging on the merged feature and a two-dimensional instance feature corresponding to the i^{th} layer of feature map, to obtain a road surface feature corresponding to the i^{th} layer of feature map, wherein the plurality of road surface features respectively corresponding to the plurality of layers of feature maps comprise the road surface feature corresponding to the i^{th} layer of feature map, i is an integer not less than 1, and when i is 1, a road surface feature corresponding to a 0^{th} layer of feature map does not exist; and
obtain the road surface segmentation mask based on the plurality of road surface features respectively corresponding to the plurality of layers of feature maps.

13. The apparatus according to claim 11 or 12, wherein the prediction module is further configured to:
perform prediction based on the plurality of two-dimensional instance features, to obtain an initial prediction box;
determine, based on the road surface segmentation mask, whether a central point of the initial prediction box is on a road surface; and
if the central point of the initial prediction box is on the road surface, use the initial prediction box as the road surface obstacle target in the input image.

14. The apparatus according to any one of claims 10 to 13, wherein the processing module is further configured to:
perform segmentation mask prediction on the plurality of layers of feature maps, to obtain a plurality of obstacle features respectively corresponding to the plurality of layers of feature maps; and
the prediction module is further configured to:
perform prediction based on the plurality of two-dimensional instance features and the plurality of obstacle features, to obtain the road surface obstacle target in the input image.

15. The apparatus according to claim 14, wherein the prediction module is further configured to:
perform prediction based on the plurality of two-dimensional instance features, to obtain the initial prediction box and a first confidence level;
determine, based on the obstacle features, whether the central point of the initial prediction box falls within an obstacle;
if the central point of the initial prediction box falls within the obstacle, update the first confidence level to a second confidence level, wherein the second confidence level is greater than the first confidence level; and
if the second confidence level is greater than a preset value, determine the road surface obstacle target in the input image based on the initial prediction box.

16. The apparatus according to claim 15, wherein the prediction module is further configured to:
use the initial prediction box as the road surface obstacle target in the input image; or
determine, based on the road surface segmentation mask, whether the central point of the initial prediction box is on the road surface, wherein the road surface segmentation mask is obtained by performing processing based on the plurality of layers of feature maps and the plurality of two-dimensional instance features; and
if the central point of the initial prediction box is on the road surface, use the initial prediction box as the road surface obstacle target in the input image.

17. The apparatus according to any one of claims 10 to 16, wherein the processing module comprises a backbone network and a main detection branch network, and the main detection branch network comprises a neck network and a head network;
the performing feature extraction on the input image, to obtain the plurality of layers of feature maps is implemented through the backbone network;
the performing merging on each layer of feature map and an upper layer of feature map in the plurality of layers of feature maps, to obtain a plurality of two-dimensional instance features respectively corresponding to the plurality of layers of feature maps is implemented through the neck network; and
the performing prediction based on the plurality of two-dimensional instance features, to obtain a road surface obstacle target in the input image is implemented through the head network.

18. The apparatus according to claim 17, wherein the backbone network and the neck network are obtained through training in the following manner:
for a k^{th} time of training, inputting a sample image to a backbone network Zₖ for feature extraction, to obtain a plurality of layers of sample feature maps of the sample image, wherein k is an integer not less than 1;
inputting the plurality of layers of sample feature maps to a neck network Nₖ for merging, to obtain a plurality of two-dimensional instance features respectively corresponding to the plurality of layers of sample feature maps;
obtaining a predicted value of the road surface segmentation mask based on the plurality of two-dimensional instance features and the plurality of layers of sample feature maps;
calculating a loss value based on a labeling value and the predicted value, and calculating a gradient based on the loss value; and
adjusting parameters of the backbone network Zₖ and the neck network Nₖ based on the gradient, setting k=k+1, repeating the foregoing steps until k reaches a preset quantity of times, using the backbone network Zₖ as the backbone network, and using the neck network Nₖ as the neck network.

19. A target detection apparatus, comprising a processor and a communication interface, wherein the communication interface is configured to receive and/or send data, and/or the communication interface is configured to provide an output and/or output for the processor, and the processor is configured to invoke computer instructions to implement the method according to any one of claims 1 to 9.

20. A computer-readable storage medium, wherein the computer-readable storage medium stores a computer program, and the computer program is used to implement the method according to any one of claims 1 to 9.

21. A computer program product, wherein when the computer program product runs on a computer, the computer is enabled to perform the method according to any one of claims 1 to 9.
